# EUROPÄISCHE PATENTSCHRIFT

(11) **EP 0 408 671 B1**
(45) Veröffentlichungstag und Bekanntmachung des Hinweises auf die Patenterteilung: **27.10.1993**
(21) Anmeldenummer: 89908380.2
(22) Anmeldetag: 19.07.1989
(51) Int. Cl.: B60J 7/057, G05G 1/08

(54) **KURBELMECHANISMUS FÜR EINEN HEBE-SCHIEBEDECKEL EINES KRAFTFAHRZEUGS**
CRANK MECHANISM FOR THE LIFTING/SLIDING ROOF OF A MOTOR VEHICLE
MECANISME A MANIVELLE POUR UN TOIT OUVRANT ET COULISSANT DE VEHICULE A MOTEUR

(30) Priorität: 26.07.1988 DE 3825269
(43) Veröffentlichungstag der Anmeldung: 23.01.1991
(73) Patentinhaber: WAGNER,Norbert, D-36381 Schlüchtern (DE)
(72) Erfinder: WAGNER,Norbert, D-36381 Schlüchtern (DE)
(74) Vertreter: Schickedanz, Willi, Dipl.-Ing.
(86) Internationale Anmeldenummer: DE8900481
(87) Internationale Veröffentlichungsnummer: WO9000987

(56) Entgegenhaltungen:
- DE-A- 2 657 850
- DE-A- 3 200 289
- FR-A- 2 272 856
- GB-A- 2 151 698

## Beschreibung

Die Erfindung betrifft einen Kurbelmechanismus nach dem Oberbegriff des Patentanspruchs 1.

In der Decke von Kraftfahrzeugen angeordnete Hebe-Schiebedeckel werden in der Regel mit Handkurbeln bedient. Dabei sollen mit diesen Handkurbeln wenigstens zwei Funktionen ausgeübt werden können: das Heben des Deckels um einen bestimmten Winkel relativ zu einer parallel zur Decke des Kraftfahrzeugs verlaufenden Achse sowie das Verschieben dieses Deckels parallel zur Kraftfahrzeugdecke. Nach der Ausübung der jeweiligen Funktion soll die Handkurbel oft auch noch in eine Versenknische eingeklappt werden, damit die Innenseite der Decke des Kraftfahrzeugs keine hervorstehenden Kanten hat. Dieses Einklappen soll darüber hinaus auch noch aus jeder Endposition der Handkurbel möglich sein, was eine zusätzliche Schwierigkeit bedeutet, weil sich der Kurbelarm oft nur dann in die Versenknische einklappen läßt, wenn er sich in einer ganz bestimmten Stellung befindet. Ob mit der Handkurbel der Hebe-Schiebedeckel angehoben oder verschoben wird, kann beispielsweise durch Drehrichtungsumkehr entschieden werden. Das Kurbeln im Uhrzeigersinn bewirkt dabei z. B. das Heben des Deckels, während das Kurbeln im Gegenuhrzeigersinn das Verschieben des Deckels bewirkt. Wichtig ist in diesem Fall, daß eine Nullage zwischen beiden Drehrichtungen definiert wird.

Es ist bereits ein Kurbelantrieb für Hebe-Schiebedächer von Kraftfahrzeugen bekannt, bei dem ein Kurbelarm um seine Schwenkachse hinaus in eine bestimmte Stellung verschwenkt wird und sein über die Schwenkachse hinaus verlängertes Ende mit einem Haken am unteren Ende des Stifts in Berührung kommt, wobei dieser Stift entgegen der Wirkung einer Feder nach unten gezogen wird (DE-A-24 26 765). Durch die Bewegung des Stifts wird eine Außenverzahnung mit einer Innenverzahnung an einem Antriebsritzel außer Eingriff gebracht, so daß der Kurbelarm zusammen mit einer Hülse und dem Stift in eine Lage drehbar ist, aus der er in eine Versenknische hineingeschwenkt werden kann. Durch das Verschwenken des Kurbelarms ist es somit nicht mehr möglich, das Hebe-Schiebedach zu verschwenken. Nachteilig ist indessen bei diesem bekannten Kurbelantrieb, daß der Kurbelarm vor der Schwenkbewegung aus seiner Arbeitsstellung zunächst in eine Stellung gebracht werden muß, die der späteren Schwenkbewegung entgegengerichtet ist. Hierdurch nimmt der Kurbelarm drei quasi-stabile Lagen an, was bezüglich der Bedienung umständlich ist.

Ein ähnlicher handbetätigter Kurbel- und Antriebsmechanismus für einen Hebe-Schiebedeckel, mit dem es möglich ist, den Kurbelarm bei einer Vielzahl von Hubstellungen des Deckels in eine Versenknische einzuklappen, ist aus der DE-C-24 47 190 bekannt. Hierbei können alle Funktionen für die Betätigung des Schiebedeckels, nämlich sowohl das Verschieben als auch das Anstellen sowie das Lösen der Arretierung in der Schließstellung zur Ermöglichung der Anstellbewegung mit einem einzigen Betätigungsglied, nämlich dem Kurbelarm, durchgeführt werden. Nachteilig ist hierbei, daß der Kurbelarm in drei verschiedenen Stellungen arretiert werden muß. Eine erste Stellung ist beim Anheben des Deckels, eine Zweite beim normalen Verschieben des Deckels und eine dritte in der eingeklappten Stellung erforderlich.

Ferner ist eine Vorrichtung zur Begrenzung der Anzahl von Umdrehungen einer Welle für drehbare Antriebe von Schiebedachantrieben an Kraftfahrzeugen bekannt, bei der für zwei verschiedene, mit derselben Welle bewirkbare Bewegungsabläufe für wahlweises Verschieben oder Anstellen beim Einschwenken des Schiebedeckels trotz der für die beiden Bewegungsabläufe unterschiedlich langen, mittels der Vorrichtung zu begrenzenden Stellwege nur eine Schaltstellung vorgesehen ist, um die Bedienung des mit zwei Schaltfunktionen ausgestatteten Schiebedachs zu vereinfachen (DE-C-23 33 666). Hierbei ist parallel zu der Welle ein Sperrstift verschiebbar angeordnet, der in seiner eingeschalteten Endstellung beide Drehrichtungen des Antriebs zuläßt und in seiner ausgerückten Stellung den Antrieb in beiden Richtungen blockiert. Nachteilig ist hierbei, daß die Handkurbel zunächst mit Daumen und Zeigefinger aus ihrer Ruhelage herausgeholt werden muß. Sodann muß entweder eine zweite Hand oder der Daumen der ersten Hand zum Drücken eines Druckknopfs benutzt werden. Dabei muß der Zeigefinger alleine die Drehung der Handkurbel einleiten, bevor dann wieder mit Daumen und Zeigefinger weitergedreht werden kann. Dies ist vom Standpunkt der Bedienbarkeit und der Sicherheit unbefriedigend. In den Endlagen steht die Handkurbel schräg und kann nicht eingeklappt werden. Außerdem ist der Endschlag in den Endlagen nicht definiert.

Weiterhin ist auch noch ein Schiebedach für Kraftfahrzeuge bekannt, das ein Kurbelgetriebe mit einer Scheibe aufweist, bei deren Eingriff mit einem Zapfen das Kurbelgetriebe gesperrt ist, wobei der Zapfen in einer vorbestimmten Klappstellung der Kurbel ausgerückt ist, so daß der Schiebedeckel verstellt werden kann. Ein solches Kurbelgetriebe, das die Merkmale des Oberbegriffs des Anspruchs 1 aufweist, ist aus der DE-A-3 200 289 bekannt. Die Kurbel hat hierbei drei stabile Klappstellungen. In der vollständig eingeklappten Stellung ist die Kurbel kraftschlüssig mit dem Getriebe verbunden. Hierbei ist das Getriebe in einer Drehrichtung gesperrt. In der nächsten Klappstellung ist die Kurbel vom Getriebe getrennt, wobei das Getriebe in beiden Drehrichtungen frei ist. Diese Stellung wird benötigt, um aus einer beliebigen Stellung des Schiebedachs die Handkurbel verdrehen und in die Mulde einklappen zu können. In der dritten Klappstellung, wenn die Kurbel ganz herausgeklappt ist, kann sie bis zu einem Anschlag im Getriebe gedreht werden.

Schließlich ist auch noch ein Handkurbelgerät für Schiebe- oder Hebedächer bekannt, mit dem es möglich ist, auf die Betätigung eines Druckknopfes zur Arretierung einer einmal eingestellten Ausstellhöhe des Schiebe-Hebedaches zu verzichten (DE-A-3 308 823). Bei diesem Handkurbelantrieb sind einer Handkurbel und einem Eingangszahnrad eines Getriebes formschlüssige Eingriffsmittel koaxial zugeordnet, wobei diese Eingriffsmittel gegen eine Federlast vorübergehend außer Eingriff gebracht werden können. Als formschlüssige Eingriffsmittel sind aufeinanderliegende Vorsprünge und Vertiefungen in einem Rasterkopf und einer Rasterscheibe vorgesehen. Nachteilig ist bei diesem bekannten Handkurbelantrieb indessen, daß die Handkurbel gedreht und gleichzeitig samt einer Nabe gegen die Last einer Tellerfeder um einen gewissen Hubweg nach oben gedrückt werden muß.

Der Erfindung liegt die Aufgabe zugrunde, einen Kurbelmechanismus nach dem Oberbegriff des Patentanspruchs 1 zu schaffen, der lediglich zwei Schwenkstellungen aufweist, die jedoch im Mechanismus eindeutig definiert sind, um die Drehbewegung der Kurbel zu sperren oder freizugeben.

Diese Aufgabe wird gemäß den Merkmalen des Patentanspruchs 1 gelöst.

Der mit der Erfindung erzielte Vorteil besteht insbesondere darin, daß die Handkurbel in beliebiger Stellung relativ zum Fahrzeugdach mittels eines Sperrstifts blockiert werden kann. Wird die Handkurbel heruntergeklappt, so kann sofort im Uhrzeiger- oder im Gegenuhrzeigersinn gedreht werden, wodurch ein sofortiges Heben oder Verschieben des Deckels ermöglicht wird. Außerdem ist die Endlage definiert, und die Zerstörung von Zahnringen des Kurbelmechanismusgetriebes ist so gut wie ausgeschlossen. Weiterhin ist es möglich, auf der Unterseite des Mechanismus eine Abdeckkappe vorzusehen, wodurch ein Beschriftungsfeld entsteht und Schrauben und Stifte verdeckt werden.

Ein Ausführungsbeispiel der Erfindung ist in der Zeichnung dargestellt und wird im folgenden näher beschrieben. Es zeigen:
- Fig. 1: einen Kurbelmechanismus in einer Seitenansicht, wobei die Handkurbel relativ zu einer Rosette des Kurbelantriebs eine erste Stellung einnimmt;
- Fig. 2: den Kurbelmechanismus gemäß Fig. 1, wobei jedoch die Handkurbel relativ zur Rosette eine um 90 Grad gedrehte Stellung einnimmt;
- Fig. 3: eine Ansicht auf die Unterseite des Kurbelmechanismus gemäß Fig. 2;
- Fig. 4: eine Draufsicht auf die Oberseite des Kurbelmechanismus gemäß Fig. 2;
- Fig. 5: eine Seitenansicht des Kurbelmechanismus gemäß Fig. 2, wobei jedoch der Kurbelarm nach oben geklappt ist;
- Fig. 6: eine Detaildarstellung einer Vorrichtung zum Verschieben eines Sperrstifts, wobei sich die Vorrichtung in einer ersten Stellung befindet;
- Fig. 7: eine Darstellung wie in Fig. 6, wobei sich jedoch die Vorrichtung zum Verschieben des Sperrstifts in einer zweiten Stellung befindet;
- Fig. 8: eine Schnittdarstellung eines Kurbelmechanismus, bei der sowohl die Sperrvorrichtung als auch der eigentliche Kurbelantrieb zu erkennen sind.

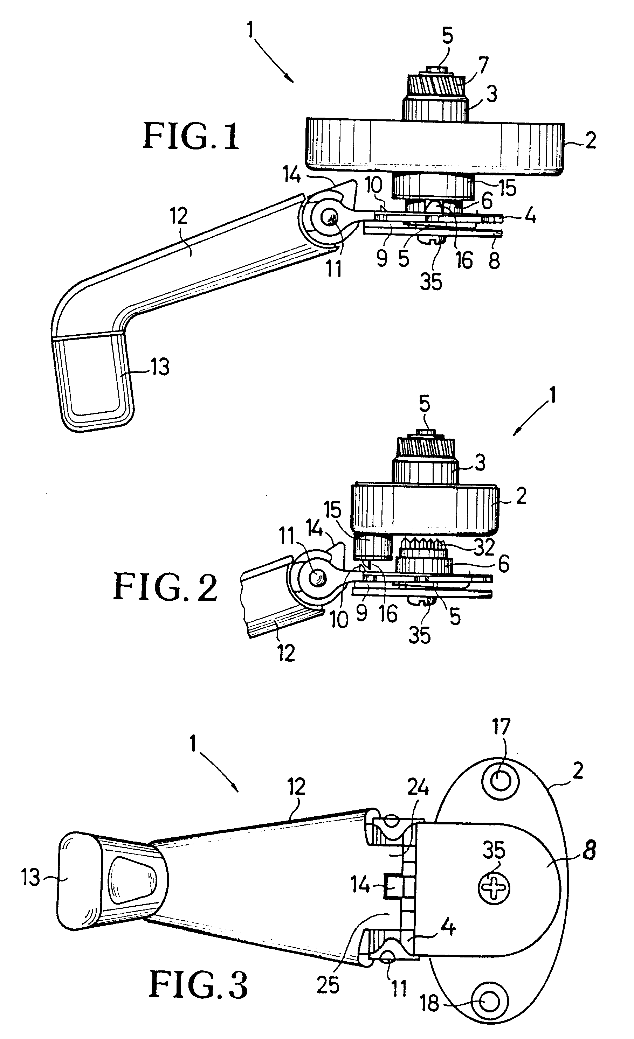

In der Fig. 1 ist ein Kurbelmechanismus 1 für die Bedienung eines Hebe-Schiebedeckels in einem Kraftfahrzeug dargestellt. Dieser Kurbelmechanismus 1 weist eine Rosette 2, einen mit dieser Rosette 2 gemeinsam verdrehbaren Schaft 3, eine mit einem Flansch 4 fest verbundene Welle 5, ein auf der Welle 5 fest aufsitzendes Unterteil 6 und ein ebenfalls fest mit der Welle 5 verbundenes Zahnrad 7 auf. Zu dem Kurbelmechanismus gehören auch noch eine untere Platte 8, die in einem Abstand von dem Flansch 4 angeordnet ist und im wesentlichen dieselben Konturen wie dieser hat. Platte 8 und Flansch 4 haben stets dieselbe räumliche Lage zueinander, da sie beide fest mit der Welle 5 verbunden sind. Zwischen der Platte 8 und dem Flansch 4 befindet sich ein Verschiebestück 9, das gegen die Kraft einer Feder in Richtung auf die Welle 5 verschoben werden kann und einen im Querschnitt dreieckförmigen Aufsatz 10 enthält, der mit einem zu verschiebenden Element in Kontakt gebracht werden kann.

Mit dem Flansch 4 ist über eine Achse 11 ein Kurbelarm 12 mit einem Kurbelstück 13 verbunden, der zwei Einstellungen einnehmen kann, von denen die eine Einstellung in der Fig. 1 gezeigt ist. In dieser Endstellung ist ein Verschiebeteil 14 außer Kontakt mit dem Verschiebestück 9, das es verschieben soll. Die Rosette 2 ist relativ zur Decke eines Kraftfahrzeugs ortsfest angeordnet, so daß sich bei einer Drehung des Kurbelarms 12 relativ zu dieser Rosette 2 die Platte 8, der Flansch 4, das Verschiebestück 9, das Zahnrad 7, das Unterteil 6 und die Welle 5 drehen, während die Rosette 2, die noch einen nach unten gerichteten Vorsprung 15 aufweist, zusammen mit dem Schaft 3 ihre Lage nicht verändert.

Für die Verschiebung eines in der Fig. 1 nicht erkennbaren Sperrstifts ist an dem Vorsprung 15 eine Rampe 16 vorgesehen, die mit dem Aufsatz 10 in Kontakt gebracht werden muß, aber in der Fig.1 mit diesem Aufsatz 10 nicht in Kontakt ist, weil sich der Kurbelarm 12 nicht in der geeigneten Position zur Rosette 2 befindet. Wird der Kurbelarm 12 um 90 Grad relativ zur Rosette 2 gedreht, so ergibt sich die in der Fig.2 gezeigte Position. Bei der Darstellung der Fig.2 ist allerdings die Position des Kurbelarms 12 beibehalten, während die Position der Rosette 2 gegenüber der Darstellung der Fig.1 um 90 Grad gedreht ist. Hierdurch werden die für die Erfindung wichtigen Bauelemente besser erkennbar.

Bei diesen Bauelementen handelt es sich um das Verschiebestück 9, den Aufsatz 10, den Vorsprung 15 und die Rampe 16. Der Aufsatz 10 liegt nun direkt der Rampe 16 gegenüber, so daß bei einer Bewegung des Aufsatzes 10 nach rechts eine Kraft auf die Rampe 16 ausgeübt würde und diese wegen ihrer schrägen Fläche eine vertikale Kraftkomponente aufnehmen müßte, welche die Rampe 16 nach oben bewegen könnte. In der Fig. 2 erkennt man oberhalb des Unterteils 6 die Verzahnung 32.

In der Fig. 3 ist der Kurbelmechanismus 1 in einer Ansicht von unten dargestellt. Es handelt sich hierbei um diejenige Ansicht, die der Kraftfahrer hat, wenn er gegen die Decke seines Kraftfahrzeuges sieht. Man erkennt hierbei, daß die Rosette 2 zwei Bohrungen 17, 18 aufweist, durch die Schrauben für die Befestigung der Rosette 2 an der Kraftfahrzeugdecke gesteckt werden können. Der Kurbelarm 12 ist an seinem einen Ende aufgebrochen dargestellt, so daß man die Achse 11 sieht. Man erkennt außerdem die Unterseite des Verschiebeteils 14, das zwischen zwei Stegen 24, 25 des Kurbelarms 12 angeordnet ist. Desgleichen sind die Platte 8 und der Flansch 4 sichtbar, wobei der Flansch 4 mittels einer Schraube 35 mit der Welle 5 verbunden ist.

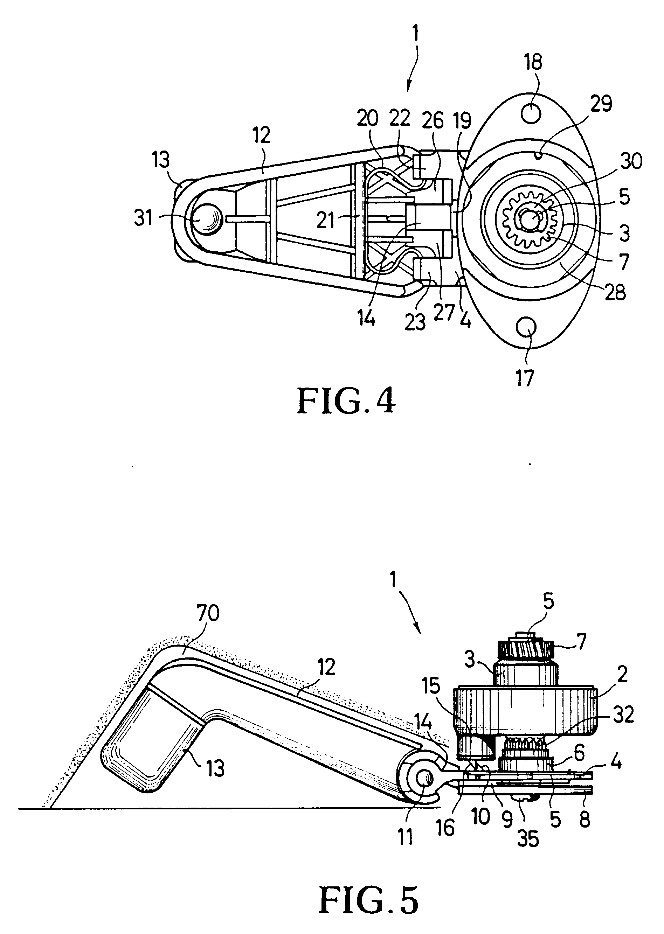

Die Fig. 4 zeigt denselben Kurbelmechanismus 1 wie in der Fig. 3, jedoch in einer Ansicht auf die Oberseite, die der Kraftfahrzeugdecke zugewandt ist, wobei der Kurbelarm 12 von dieser Kraftfahrzeugdecke weggeklappt ist. Hierdurch bildet sich eine Lücke 19 zwischen dem Verschiebeteil 14 und der Rosette 2.

Man erkennt die Feder 20, welche im wesentlichen die Form eines Omega besitzt, dessen oberer Teil sich an einer Querverstrebung 21 des Kurbelarms 12 abstützt, während die unteren Enden in Lagern 22,23 eingeführt sind, die mit dem Flansch 4 fest in Verbindung stehen und in denen auch die Achse 11 ruht. Aufgrund dieser Feder 20 kann der Kurbelarm 12 zwei stabile Lagen einnehmen: eine untere Lage, die in der Fig.4 dargestellt ist und die durch den Anschlag des Kurbelarms 12 mit seinen Vorsprüngen 24,25 auf den Flansch 4 begrenzt wird und eine obere Lage, die durch das Verschiebeteil 14 und durch Anschlagteile 26,27 definiert wird. Eine Scheibe 28 mit exzentrischem Umfang und einer Aussparung 29 in diesem Umfang umgibt den Schaft 3, der das Zahnrad 7 trägt, welches mit einem Sprengring 30 mit der Welle 5 verbunden ist. Mit 31 ist ein Nietenkopf bezeichnet, dessen Niete das Kurbelstück 13 mit dem Kurbelarm 12 drehbar verbindet.

In der Fig.5 ist eine Ansicht des Kurbelmechanismus 1 dargestellt, die im wesentlichen mit der Ansicht der Fig.2 übereinstimmt, wobei jedoch der Kurbelarm 12 nach oben geklappt ist. Man erkennt hierbei, daß sich die Rampe 16 nun links vom Aufsatz 10 befindet. Durch das Hochheben des Kurbelarms 12 wurde das Verschiebeteil 14 gegen die Kante des Verschiebestücks 9 gedrückt, das sich hierauf zwischen den beiden Platten 4,8 nach rechts bewegte, mit seiner Schräge des Aufsatzes 10 die Rampe 16 gegen eine Federkraft nach oben schob und anschließend auf der Rückseite dieser Rampe 16 erschien, so daß diese sich wieder nach unten bewegte. Da sich jetzt die beiden nicht abgeschrägten Flächen von Aufsatz 10 und Rampe 16 gegenüberliegen, kann die Rampe 16 nicht mehr hochgedrückt werden. Eine Nische 70, die sich im Dach eines Kraftfahrzeugs befindet, ist in der Fig. 5 schematisch dargestellt.

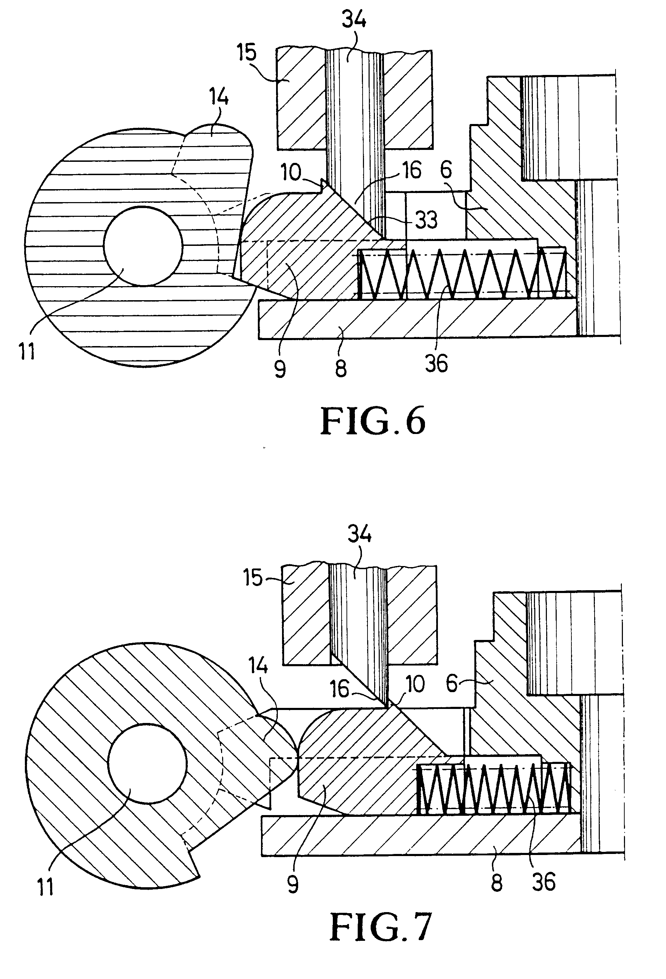

Die Einzelheiten beim Hochheben der Rampe 16 und damit des Sperrstifts, der mit der Rampe 16 verbunden ist, sind in den Figuren 6 und 7 gezeigt.

Aus der Fig. 6 ist erkennbar, wie durch den Druck des Verschiebeteils 14 auf das Verschiebestück 9 der Aufsatz 10, der die Verlängerung einer Schräge 33 des Verschiebestücks 9 darstellt, die Rampe 16 und damit der Sperrstift 34 hochgehoben werden. Der Druck erfolgt hierbei gegen die Kraft einer Feder 36, die sich zwischen dem Unterteil 6 und dem Verschiebeteil 9 befindet.

In der Fig. 7 ist der Zustand dargestellt, in dem der Sperrstift 34 hochgehoben und gegen ein Rückwärtsverschieben gesperrt ist. Die Rückwärtssperrung ergibt sich dadurch, daß sich nur die beiden nicht abgeschrägten rückseitigen Flanken von Aufsatz 10 und Rampe 16 gegenüber liegen.

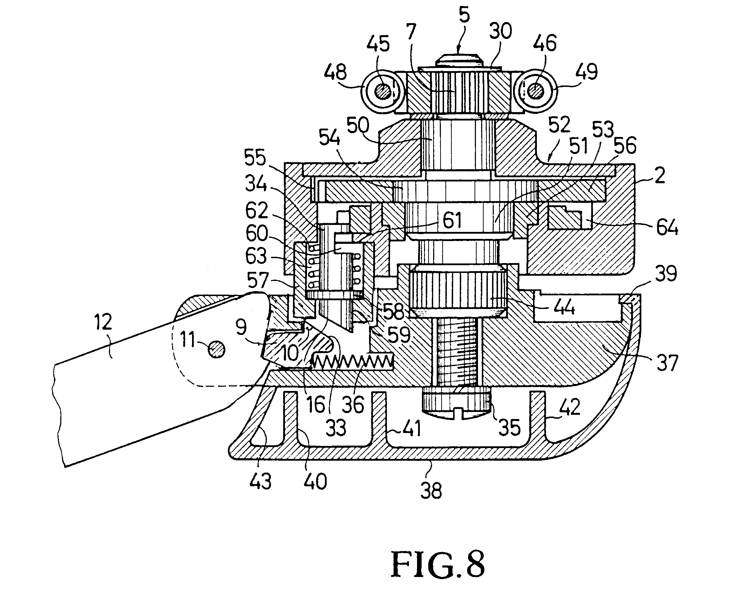

In der Fig. 8 ist eine Variante der in den vorangegangenen Figuren beschriebenen Vorrichtung in teilweise geschnittener Ansicht dargestellt, die gleichzeitig auch Einzelheiten des an sich bekannten Antriebsmechanismus zeigt. Bei dieser Variante ist ein einheitlicher Block 37 vorgesehen, der das Verschiebestück 9 und die Feder 36 trägt. Dieser Block 37 ist außerdem nach unten mit einer Kappe 38 abgeschlossen, die mit einer Nase 39 in eine Aussparung des Blocks 37 einrastet und die mehrere Abstandhalter 40, 41, 42 aufweist. Zwischen den Abstandhaltern 41 und 42 befindet sich der Schraubenkopf 35. Die Kappe 38 deckt somit diesen Schraubenkopf ab und bildet ein Feld für eine eventuelle Beschriftung. Ein Endabschluß 43 kann in seinem oberen Bereich so ausgebildet sein, daß er ebenfalls in den Block 37 einrastet.

Die Welle 5 ist auf der einen Seite mit einem kerbverzahnten Kopf 44 und auf der anderen Seite mit dem Antriebszahnrad 7 versehen, das zwei Drähte 45, 46 antreibt, welche spiralförmige Schneckenaufsätze 48, 49 besitzen und sogenannte Gewindekabel bilden. Der Draht 45 wird hierdurch stets in die entgegengesetzte Richtung wie der Draht 46 bewegt. Die Drähte 45, 46 sind mit Hebe- und Schiebemechanismen verbunden, die bereits bekannt sind und deshalb nicht näher beschrieben werden.

Die auf den kerbverzahnten Kopf 44 mit einer entsprechenden Gegenverzahnung aufgesteckte Bedienungskurbel ist aus dem als Kurbelfuß dienenden Block 37 und dem Kurbelarm 12 zusammengesetzt. Der Block 37 und der Kurbelarm 12 sind mittels der Achse 11 gelenkig miteinander verbunden. Die durch den Rosettenkörper 2 geführte Welle 5 ist mit Bereichen 50 und 51 drehbar an einem Lagerdeckel 52 bzw. einem in den Rosettenkörper 2 eingesetzten Lagerring 53 gelagert.

Der Lagerdeckel 52 ist in den Rosettenkörper 2 eingelassen und beispielsweise an seinem Umfang durch Verstemmen befestigt. Die axiale Festlegung des Antriebszahnrads 7 übernimmt der Sprengring 30. Eine an der Welle 5 starr befestigte Exzenterscheibe 54 lagert den mit der Außenverzahnung 55 versehenen Zahnring 56, dessen Verzahnung mit der Innenverzahnung im Rosettenkörper 2 in Eingriff steht. Die Außenverzahnung kann z. B. vierunddreißig Zähne besitzen, während die Innenverzahnung sechsunddreißig Zähne aufweist.

Die Wirkungsweise der in der Fig. 8 dargestellten Vorrichtung ist folgende: Bei Drehung der Welle 5 mittels des Kurbelarms 12 in der einen oder anderen Richtung und der mit ihr drehfest verbundenen Teile bewegt die Exzenterscheibe 54 den Zahnring 56, der sich dabei mit seiner Außenverzahnung 55 an der ortsfesten Innenverzahnung der Rosette 2 abwälzt. Da sich die Zähnezahlen um zwei Zähne unterscheiden, ist die Relativstellung zwischen dem Zahnring 56 und der Innenverzahnung nach Ablauf einer Umdrehung der Welle 5 um das Maß zweier Zahnteilungen in Umfangsrichtung verschoben. Der Zahnring 56 dreht sich dabei entgegengesetzt zur Drehrichtung der Welle 5, allerdings mit um Größenordnungen geringerer Winkelgeschwindigkeit. Es ist daher ersichtlich, daß die Anbringung von Anschlägen am Zahnring 56 und die Zuordnung ortsfester Anschläge nach genau festlegbarer Umdrehungszahl der Welle 5 zur Blockierung der Welle 5 und damit Umdrehungsbegrenzung, d. h. Wegbegrenzung der über das Zahnrad 7 angetriebenen Teile führen muß.

Nachfolgend werden die Anschlagmittel, die einerseits am Rosettenkörper 2 und andererseits am Zahnring 56 angeordnet sind, näher erläutert. Der in einer Führungsbuchse 57 verschiebbar geführte Sperrstift 34 weist einen Flansch 58 auf, durch den die Bewegung des Sperrstifts 34 aufgrund eines Ringvorsprungs 59 der Führungsbuchse 57 begrenzt wird. Das mit einer Querausnehmung 60 versehene Ende des Sperrstifts 34 ist in einer Bohrung 61 im Rosettenkörper 2 geführt. Eine Schraubendruckfeder 62 ist in den Ringraum zwischen dem Sperrstift 34 und einer Zylinderbohrung 63 eingesetzt und stützt sich einerseits an dem am Sperrstift 34 befestigten und mit diesem aus einem Stück bestehenden Flansch 58 und andererseits am Rosettenkörper 2 ab. Die Bohrung 63 ist bis auf einen die Welle 5 konzentrisch umgebenden Ringkanal 64 durchgeführt, in den der Sperrstift 34 hineinreicht.

Weitere Einzelheiten des Aufbaus der Vorrichtung gemäß Fig. 8 können der DE-C-23 33 666 entnommen werden. Da sie für die vorliegende Erfindung nicht wesentlich sind, wird auf ihre Beschreibung verzichtet.

Es wird noch betont, daß der Stift 34 im Ausführungsbeispiel zwar eine abgeschrägte Rampe 16 besitzt, aber eine solche nicht unbedingt benötigt. Es wäre auch denkbar, den Stift abzurunden oder sonstwie an seinem einen Ende so auszubilden, daß er hochgehoben werden kann und im entsprechend ausgebildeten Schiebestück 9 einrastet.

Außerdem ist der Mechanismus zum Hochheben des Stifts nicht auf die Anwendung bei einem Kurbelmechanismus beschränkt, sondern er kann überall dort Verwendung finden, wo ein Stift mittels einer Drehbewegung eines Arms oder dergleichen hochgehoben werden soll.

## Patentansprüche

1. Kurbelmechanismus für einen Hebe-Schiebedeckel eines Kraftfahrzeugs, mit
a) einem Kurbelarm (12);
b) einer Welle (5);
c) einer Kupplung (45,46), welche die Welle (5) mit einem Hebe-Schiebemechanismus für den Hebe-Schiebedeckel verbindet;
d) einer Drehachse (11), um die der Kurbelarm (12) schwenkbar ist und die senkrecht zur Längsachse der Welle (5) angeordnet ist;
e) einen Sperrstift (34), der sich parallel zur Längsachse der Welle (5) erstreckt und der eine erste und eine zweite Position einnehmen kann, **dadurch gekennzeichnet**, daß
f) der Sperrstift (34) in seiner ersten Position eine Drehbewegung des Kurbelarms (12) um die Längsachse der Welle (5) herum verhindert und in seiner zweiten Position diese Drehbewegung des Kurbelarms (12) freigibt, wobei in Abhängigkeit von der Schwenkstellung des Kurbelarms (12) der Sperrstift (34) in seine jeweilige erste oder zweite Position bewegt wird;
g) eine senkrecht zur Längsachse der Welle (5) verschiebbare Vorrichtung (9) vorgesehen ist, welche im Zusammenwirken mit einem Verschiebeteil (14) des Kurbelarms (12) den Sperrstift (34) wahrend der Schwenkbewegung des Kurbelarms (12) aus seiner ersten in eine zweite Position oder umgekehrt parallel zur Längsachse der Welle (5) verschiebt.

2. Kurbelmechanismus nach Anspruch 1, **dadurch gekennzeichnet**, daß durch das Schwenken des Kurbelarms (12) in eine erste Endstellung eine Sperrvorrichtung betätigt wird, welche die Welle (5) gegen Drehbewegungen sperrt und daß durch Schwenken des Kurbelarms (12) in eine zweite Endstellung die Sperrvorrichtung entriegelt und eine Drehbewegung der Welle (5) ermöglicht wird.

3. Kurbelmechanismus nach Anspruch 2, **dadurch gekennzeichnet**, daß die Sperrvorrichtung ein Schiebestück (9) enthält, das einen Sperrstift (34) bewegt.

4. Kurbelmechanismus nach Anspruch 2, dadurch gekennzeichnet, daß die Sperrvorrichtung beim Schwenken des Kurbelarms (12) gegen die Kraftfahrzeugdecke gelöst wird und beim Herunterklappen des Kurbelarms (12) noch gelöst ist.

5. Kurbelmechanismus nach den Ansprüchen 1 und 3, dadurch gekennzeichnet, daß ein Flansch (4) starr mit der Welle (5) verbunden ist und an diesem Flansch (4) in einem Abstand von der Welle (5) der Kurbelarm (12) schwenkbar um eine Achse (11) befestigt ist, wobei dieser Kurbelarm (12) einen Vorsprung (14) aufweist, mit dem das Schiebestück (9) verschoben werden kann, mit dem der Sperrstift (34) bewegt wird.

6. Kurbelmechanismus nach den Ansprüchen 1 und 5, dadurch gekennzeichnet, daß auf der Welle (5) und oberhalb des Flansches (4) ein Teil (2) angeordnet ist, in dem sich die Welle (5) dreht und das ein nach unten gerichtetes Element (16) aufweist, welches bei herausgeschobenem Schiebeelement (9) zwischen der Welle (5) und diesem Schiebeelement (9) angeordnet ist und welches bei hineingeschobenem Schiebeelement (9) einen Haltevorsprung (10) dieses Schiebeelements (9) hintergreift.

7. Kurbelmechanismus nach Anspruch 6, dadurch gekennzeichnet, daß das nach unten gerichtete Teil eine Abschrägung (33) aufweist, die bei herausgeschobenem Schiebeelement (9) auf einer Abschrägung dieses Schiebeelements (9) aufliegt, so daß das nach unten gerichtete Teil (16) dann, wenn das Schiebeelement (9) nach innen verschoben wird, hochgehoben wird, bis es den Haltevorsprung (10) des Schiebeelements (9) hintergreift.

8. Kurbelmechanismus nach den Ansprüchen 1 und 5, dadurch gekennzeichnet, daß unterhalb des Flansches (4) in einem Abstand eine Platte (8) vorgesehen ist, die im wesentlichen dieselben Abmessungen besitzt wie der Flansch (4), und daß auf dieser Platte (8) das Schiebestück (9) angeordnet ist.

9. Kurbelmechanismus nach Anspruch 8, dadurch gekennzeichnet, daß der Flansch (4) und die Platte (8) im wesentlichen aus einer Halbkreisfläche mit einem daran sich anschließenden Rechteckstück bestehen.

10. Kurbelmechanismus nach Anspruch 5, **dadurch gekennzeichnet**, daß der Flansch (4) auf seinem Umfang Einkerbungen aufweist.

11. Kurbelmechanismus nach Anspruch 9, **dadurch gekennzeichnet**, daß die Platte (8) mit einer Abdeckung versehen ist.

12. Kurbelmechanismus nach Anspruch 1, **dadurch gekennzeichnet**, daß der Antrieb für den Hebe-Schiebemechanismus eine Vorrichtung (51, 53, 54, 55) zur Begrenzung der Anzahl der Umdrehungen der Welle (5) enthält.

13. Kurbelmechanismus nach Anspruch 1, **dadurch gekennzeichnet**, daß eine Exzenterscheibe (54) starr an der Welle (5) befestigt ist.

14. Kurbelmechanismus nach Anspruch 13, **dadurch gekennzeichnet**, daß auf der Umfangsfläche der Exzenterscheibe (54) ein mit einer Außenverzahnung (55) versehener Zahnring (56) drehbar gelagert ist.

15. Kurbelmechanismus nach Anspruch 14, **dadurch gekennzeichnet**, daß der Zahnring (56) von einer konzentrisch zur Wellenachse (5) ortsfest in einem Rosettenkörper (2) angeordneten Innenverzahnung umgeben ist, deren Zahnfußkreisradius etwa um den Betrag der Exzentrizität der Exzenterscheibe (54) größer als der Zahnkopfkreisradius des Zahnrings (56) ist.

16. Kurbelmechanismus nach einem oder mehreren der vorangegangenen Ansprüche, **dadurch gekennzeichne**t, daß der parallel zur Welle (5) verschiebbare Sperrstift (34) nur in einer bestimmten Stellung des Zahnrings (56) in den Weg der mit dem Zahnring (56) verbundenen Gegenschlagmittel einschaltbar ist bzw. aus diesem durch Federkraft ausrückt.

## Claims

1. A crank mechanism for a lifting/sliding roof of a motor vehicle, having
a) a crank arm (12);
b) a shaft (5);
c) a coupling (45, 46) which connects the shaft (5) to a lifting/sliding mechanism for the lifting/sliding roof;
d) a pivot (11) about which the crank arm (12) is pivotable and which is disposed at right angles to the longitudinal axis of the shaft (5);
e) a locking pin (34) which extends parallel to the longitudinal axis of the shaft (5) and may assume a first and a second position, characterized in that
f) the locking pin (34) when in its first position prevents a rotary movement of the crank arm (12) about the longitudinal axis of the shaft (5) and when in its second position releases this rotary movement of the crank arm (12), wherein the locking pin (34) is moved into its respective first or second position in dependence upon the pivoted position of the crank arm (12);
g) a device (9) displaceable at right angles to the longitudinal axis of the shaft (5) is provided and, in cooperation with a sliding part (14) of the crank arm (12), displaces the locking pin (34) from its first position into a second position, or vice versa, parallel to the longitudinal axis of the shaft (5) during the pivoting movement of the crank arm (12).

2. A crank mechanism as claimed in claim 1, characterized in that a locking device is actuated by the pivoting of the crank arm (12) into a first end position and locks the shaft (5) against rotary movements, and that the locking device is unlocked, and a rotary movement of the shaft (5) is rendered possible, by pivoting of the crank aim (12) into a second end position.

3. A crank mechanism as claimed in claim 2, characterized in that the locking device includes a sliding piece (9) which moves a locking pin (34).

4. A crank mechanism as claimed in claim 2, characterized in that the locking device is released upon the pivoting of the crank arm (12) towards the roof of the motor vehicle and is still released when the crank arm (12) is swung down.

5. A crank mechanism as claimed in claims 1 and 3, characterized in that a flange (4) is rigidly connected to the shaft (5) and the crank arm (12) is secured to this flange (4) at a distance from the shaft (5) and is pivotable about a spindle (11), wherein this crank arm (12) has a projection (14) by which the sliding piece (9), by which the locking pin (34) is moved, may be displaced.

6. A crank mechanism as claimed in claims 1 and 5, characterized in that there is disposed on the shaft (5) and above the flange (4) a part (2) in which the shaft (5) rotates and which has a downwardly directed element (16) which is disposed between the shaft (5) and the sliding element (9) when the sliding element (9) is displaced outwardly and which engages behind a retaining projection (10) of the sliding element (9) when the sliding element (9) is displaced inwardly.

7. A crank mechanism as claimed in claim 6, characterized in that the downwardly directed part has a chamfered portion (33) which rests on a chamfered portion of the sliding element (9) when the sliding element (9) is displaced outwardly, so that, when the sliding element (9) is displaced inwardly, the downwardly directed part (16) is raised until it engages behind the retaining projection (10) of the sliding element (9).

8. A crank mechanism as claimed in claims 1 and 5, characterized in that a plate (8) is disposed below the flange (4) at a distance therefrom and has substantially the same dimensions as the flange (4), and that the sliding piece (9) is disposed on this plate (8).

9. A crank mechanism as claimed in claim 8, characterized in that the flange (4) and the plate (8) substantially comprise a semi-circular surface having a rectangular piece contiguous thereto.

10. A crank mechanism as claimed in claim 5, characterized in that the flange (4) has indentations on its periphery.

11. A crank mechanism as claimed in claim 9, characterized in that the plate (8) is provided with a cover.

12. A crank mechanism as claimed in claim 1, characterized in that the drive for the lifting/sliding mechanism includes a device (51, 53, 54, 55) for limiting the number of revolutions of the shaft (5).

13. A crank mechanism as claimed in claim 1, characterized in that an eccentric disc (54) is rigidly secured to the shaft (5).

14. A crank mechanism as claimed in claim 13, characterized in that a toothed ring (56) provided with external teeth (55) is rotatably mounted on the circumferential surface of the eccentric disc (54).

15. A crank mechanism as claimed in claim 14, characterized in that the toothed ring (56) is surrounded by internal teeth which are fixedly disposed in a rosette body (2) concentrically to the shaft (5) and whose root circle radius is larger than the tip circle radius of the toothed ring (56) by the amount of the eccentricity of the eccentric disc (54).

16. A crank mechanism as claimed in one or several of the preceding claims, characterised in that the locking pin (34) displaceable parallel to the shaft (5) is engageable by spring force into or out of the path of the abutment means connected to the toothed ring (56), only when the toothed ring (56) is in a specific position.

## Revendications

1. Mécanisme à manivelle pour un toit ouvrant et coulissant de véhicule à moteur, comprenant
a) un bras de manivelle (12) ;
b) un arbre (5) ;
c) un accouplement (45, 46) reliant l'arbre (5) avec un mécanisme d'ouverture et de coulissement pour le toit ouvrant et coulissant ;
d) un axe de rotation (11) autour duquel l'arbre de manivelle (12) peut tourner et qui est orthogonal à l'axe longitudinal de l'arbre (5) ;
e) un doigt de blocage (34) s'étendant de façon parallèle à l'axe longitudinal de l'arbre (5) et pouvant être dans une première et une deuxième position, caractérisé en ce que
f) le doigt de blocage (34), dans sa première position, empêche le bras de manivelle (12) de tourner autour de l'axe longitudinal de l'arbre (5) et, dans sa deuxième position, permet cette rotation du bras de manivelle (12), le doigt de blocage (34) étant amené dans sa première ou deuxième position en fonction de la position pivotée du bras de manivelle (12) ;
g) un dispositif (9), déplaçable de façon perpendiculaire à l'axe longitudinal de l'arbre (5), est prévu, qui, en coopération avec une pièce coulissante (14) du bras de manivelle (12), fait passer le doigt de blocage (34), au cours du mouvement de pivotement de l'arbre de la manivelle (12), de sa première dans sa deuxième position ou, inversement, en le déplaçant parallèlement à l'axe longitudinal de l'arbre (5).

2. Mécanisme à manivelle selon la revendication 1, caractérisé en ce que le pivotement du bras de manivelle (12) dans une première position terminale actionne un dispositif de blocage, qui empêche l'arbre (5) de tourner et en ce que le pivotement du bras de manivelle (12) dans une deuxième position terminale déverrouille le dispositif de blocage et permet la rotation de l'arbre (5).

3. Mécanisme à manivelle selon la revendication 2, caractérisé en ce que le dispositif de blocage contient une pièce de déplacement (9) qui déplace un doigt de blocage (34).

4. Mécanisme à manivelle selon la revendication 2, caractérisé en ce que, lorsque le bras de manivelle (12) pivote contre le toit du véhicule, le dispositif de blocage est débloqué, et qu'il est encore débloqué lorsque le bras de manivelle (12) est ramené vers le bas.

5. Mécanisme à manivelle selon les revendications 1 et 3, caractérisé en ce qu'une bride (4) est reliée de façon rigide à l'arbre (5) et l'arbre de manivelle (12) est monté de façon pivotante autour d'un axe (11), à distance de l'arbre (5), sur cette bride (4), l'arbre de manivelle (12) présentant une partie en saillie (14), au moyen de laquelle la pièce de déplacement (9), grâce à laquelle le doigt de blocage (34) est déplacé, peut être amenée à coulisser.

6. Mécanisme à manivelle selon les revendications 1 et 5, caractérisé en ce que, sur l'arbre (5) et au-dessus de la bride (4) est disposée une pièce (2) dans laquelle tourne l'arbre (5) et qui présente un élément (16) orienté vers le bas qui, lorsque l'élément de déplacement (9) est sorti, se situe entre l'arbre (5) et cet élément de déplacement (9) et qui, lorsque l'élément de déplacement (9) est rentré, saisit une saillie de maintien (10) de cet élément de déplacement (9).

7. Mécanisme à manivelle selon la revendication 6, caractérisé en ce que l'élément orienté vers le bas présente une partie biseautée (33) qui, lorsque l'élément de déplacement (9) est sorti, repose sur une partie biseautée de cet élément de déplacement (9), de telle sorte que l'élément (16) orienté vers le bas, lorsque l'élément de déplacement (9) est déplacé vers l'intérieur, est soulevé, jusqu'à ce qu'il saisisse la saillie de maintien (10) de l'élément de déplacement (9).

8. Mécanisme à manivelle selon les revendications 1 et 5, caractérisé en ce qu'une plaque (8) est prévue sous la bride (4) et à distance de celle-ci, possèdant sensiblement les mêmes dimensions que la bride (4), et en ce que la pièce de déplacement (9) est disposée sur cette plaque (8).

9. Mécanisme à manivelle selon la revendication 8, caractérisé en ce que la bride (4) et la plaque (8) présentent sensiblement la surface d'un demi-cercle, avec une pièce rectangulaire s'y rattachant.

10. Mécanisme à manivelle selon la revendication 5, caractérisé en ce que la bride (4) présente des entailles sur son pourtour.

11. Mécanisme à manivelle selon la revendication 9, caractérisé en ce que la plaque (8) est pourvue d'un capuchon.

12. Mécanisme à manivelle selon la revendication 1, caractérisé en ce que l'entraînement du mécanisme d'ouverture et de coulissement comporte un dispositif (51, 53, 54, 55) destiné à limiter le nombre de tours de l'arbre (5).

13. Mécanisme à manivelle selon la revendication 1, caractérisé en ce qu'un disque d'excentrique (54) est fixé rigidement sur l'arbre (5).

14. Mécanisme à manivelle selon la revendication 13, caractérisé en ce qu'une couronne dentée (56), pourvue d'une denture extérieure (55), est montée tournante sur le pourtour du disque d'excentrique (54).

15. Mécanisme à manivelle selon la revendication 14, caractérisé en ce que la couronne dentée (56) est entourée d'une denture intérieure disposée fixe dans un corps de rosace (2), de façon concentrique à l'axe de l'arbre (5), denture dont le rayon du cercle passant par le pied des dents est supérieur au rayon du cercle passant par le sommet des dents, de façon approximativement égale à la valeur de l'excentricité du disque d'excentrique (54).

16. Mécanisme à manivelle selon l'une ou plusieurs des revendications précédentes, caractérisé en ce que le doigt de blocage (34) déplaçable parallèlement à l'arbre (5) ne peut s'intercaler dans le parcours de la partie complémentaire liée à la couronne dentée (56) que dans une certaine position de la couronne dentée (56), ou est dégagé de celui-ci par la force d'un ressort.
